# EUROPEAN PATENT APPLICATION

(11) **EP 1 650 845 A2**
(43) Date of publication of application: **26.04.2006**
(21) Application number: 05077225.0
(22) Date of filing: 30.09.2005
(51) Int. Cl.: H02H 7/06

(54) **Load dump protection circuit**

(30) Priority: 21.10.2004 US 970596
(71) Applicant: Delphi Technologies, Inc., Troy, MI 48007 (US)
(72) Inventor: Hau, Marvin G., Carmel IN 46032 (US); Sullivan ,Dale R., Kokomo IN 46901 (US); Kalimuthu, Arivin K., Carmel IN 46033 (US)
(74) Representative: Denton, Michael John

(57) **Abstract**

A load dump protection circuit (100) includes a switch (M1), a clamp circuit (D1-D3) and a comparator (U1). The clamp circuit (D1-D3) is coupled between a power supply line and a first output terminal of the switch (M1). A second output terminal of the switch (M1) is coupled to a common return. An output of the comparator (U1) is coupled to a control terminal of the switch (M1). A first input of the comparator (U1) monitors a magnitude of a trigger signal on the power supply line. The switch (M1) provides a low impedance path between the first and second output terminals, when a magnitude of the trigger signal increases above a magnitude of a reference signal on a second input of the comparator (U1). The switch (M1) provides a high impedance path between the first and second output terminals, when the magnitude of the trigger signal decreases below a shut-off level that is less than the reference signal.

## Description

### TECHNICAL FIELD

The present invention is generally directed to a protection circuit and, more specifically, to a load dump protection circuit.

### BACKGROUND OF THE INVENTION

As is well known, load dump in an automotive or industrial equipment environment may occur when a battery, while being charged by an alternator, is disconnected from the electrical system of the automobile or industrial equipment. Upon disconnection of the battery, the alternator experiences a sudden loss of load and, as a result, produces a voltage transient, which can damage integrated circuit (IC) components, which are not designed to withstand high voltage transients.

As an example, IC components that have been utilized in 24 Volt automotive systems have typically been selected to have a breakdown voltage of around 60 Volts. Unfortunately, a voltage transient produced by a load dump may readily exceed the maximum 60V operating voltage of the IC devices, potentially damaging the IC components.

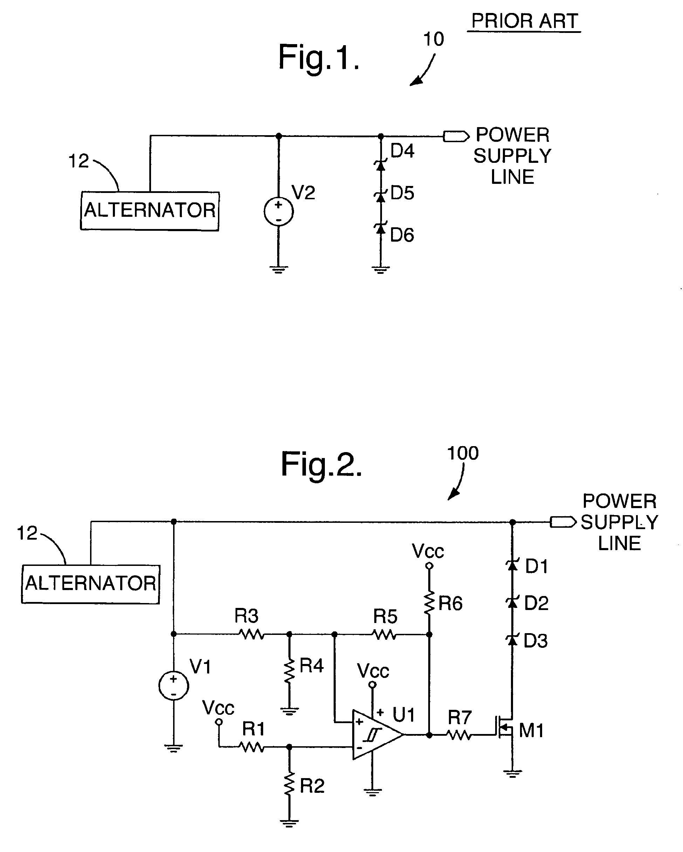

With reference to Fig. 1, an automotive power system 10 has traditionally been protected by placing one or more clamping devices D4-D6, e.g., transient suppression diodes or varistors, in series between a power supply line and ground. In such a system, in order to protect IC components with a maximum voltage rating of 60 Volts, a protection circuit must clamp the voltage to less than 60 Volts. Unfortunately, in general, clamping devices have not been particularly accurate and, as such, it has been somewhat difficult to design a system that clamps above a voltage that may be seen during normal operation, e.g., 52 Volts seen during jump starting, but does not conduct during normal operation.

For example, a typical commercially available clamping device has a breakdown/clamp voltage tolerance of about plus or minus twenty percent. It should be appreciated that if the clamping devices conduct during normal operation, the clamping devices will generally overheat and eventually be destroyed. Further, the clamping devices should be selected such that, accounting for component tolerances, the clamping device does not conduct at the maximum DC operating voltage of the system. The clamping devices must also be selected such that the maximum clamp voltage is not greater than the maximum operating voltage of the ICs and/or other devices connected to the battery line.

Typically, in order to meet these simultaneous requirements, IC components coupled to the power supply line, i.e., battery or ignition line, have typically been selected with a minimum breakdown voltage of about fifty percent higher than a maximum DC operating voltage. In a system that has a 52 Volt maximum DC operating voltage, IC components with a minimum breakdown voltage of approximately 78 Volts would be selected. Unfortunately, most standard semiconductor processes are 60 Volt processes or less, which would require a designer to use discrete devices for the power supply and for all devices coupled to the battery or ignition lines, as well as 80 Volt or 100 Volt field-effect transistor (FET) output drivers. As the cost of a semiconductor is a function of its breakdown voltage, using 80 Volt or 100 Volt FETs result in a more costly design than when 60 Volt components are utilized.

What is needed is a technique that allows for closer tolerances between a maximum system operating voltage and a minimum breakdown voltage of the IC components that are coupled to a power supply line. Such a system advantageously allows standard lower maximum voltage components to be utilized in a larger number of applications, which may advantageously lower the cost and complexity of an electronic system.

### SUMMARY OF THE INVENTION

The present invention is generally directed to a load dump protection circuit that includes a switch, a clamp circuit and a comparator. The switch includes a control terminal, a first output terminal and a second output terminal. The clamp circuit is coupled between a power supply line and the first output terminal of the switch. The second output terminal of the switch is coupled to a common return. The comparator includes a first input, a second input and an output. The output of the comparator is coupled to the control terminal of the switch.

The first input of the comparator is coupled to the power supply line and monitors a magnitude of a trigger signal on the power supply line. The second input of the comparator receives a reference signal having a reference level and the comparator provides a first control signal on the control terminal that causes the switch to provide a low impedance path between the first and second output terminals, when a magnitude of the trigger signal increases above a magnitude of the reference signal. The comparator provides a second control signal on the control terminal that causes the switch to provide a high impedance path between the first and second output terminals, when the magnitude of the trigger signal decreases below a shut-off level that is less than the reference level.

According to another embodiment of the present invention, the switch may be one of a field-effect transistor (FET), a bipolar junction transistor (BJT) and an insulated-gate bipolar junction transistor (IGBT). According to another aspect of the present invention, the clamp circuit includes at least one transient suppression diode.

According to this aspect, the at least one transient suppression diode may include three serially coupled transient suppression diodes selected to achieve a desired breakdown voltage. According to a different embodiment of the present invention, the comparator is a non-inverting comparator with hysteresis. According to still another aspect of the present invention, the reference level is about 56 Volts and the shut-off level is about 36 Volts. According to yet another aspect of the present invention, the clamp circuit contains one or more varistors and/or one or more transient suppression diodes.

These and other features, advantages and objects of the present invention will be further understood and appreciated by those skilled in the art by reference to the following specification, claims and appended drawings.

### BRIEF DESCRIPTION OF THE DRAWINGS

The present invention will now be described, by way of example, with reference to the accompanying drawings, in which:
Fig. 1 is an electrical schematic of a clamping circuit configured according to the prior art; and
Fig. 2 is an electrical schematic of a comparator-based clamping circuit configured according to one embodiment of the present invention.

### DESCRIPTION OF THE PREFERRED EMBODIMENT

According to one embodiment of the present invention, a load dump protection circuit is configured to include a clamp circuit that consists of a series of clamping devices, such as transient suppression diodes and varistors, which are switched in with a comparator circuit and a relatively high-current switch, such as a field-effect transistor (FET), a bipolar junction transistor (BJT), or an insulated-gate bipolar junction transistor (IGBT). In the case of a 24 Volt system, the comparator circuit does not switch the clamping devices into the circuit until the voltage on the battery line exceeds about 56 Volts nominally. After the comparator switches in the clamping devices, the hysteresis of the comparator circuit is used to keep the clamping devices conducting until the voltage on the power supply line decays to about 36 Volts. According to the present invention, a load dump protection circuit is designed such that the clamping devices are not active during a typical normal jump start voltage, e.g., 52 Volts, and the circuit senses, in a timely manner, a damaging transient voltage and, thus, turns on the clamp devices.

It should be appreciated that a load dump protection circuit, configured according to the present invention, clamps the voltage seen by IC components below a minimum breakdown voltage, e.g., at least 10 Volts lower than the minimum breakdown voltage on the battery and ignition lines. This is desirable as during a clamping event there may be as much as 100 Amperes of current in the line between IC components of an electronic module and the alternator, which generates the load dump. It should be appreciated that the voltage at the alternator is generally higher, e.g., 5 to 10 Volts above, than the voltage at the battery (and various electronic modules that are coupled to the battery line), as the resistance of the vehicle wiring harness must be taken into consideration at high-current levels. As such, it is generally desirable for the clamp devices to actually clamp the supply line voltage below about 50 Volts in a 24 Volt system, to account for the voltage drop in the wiring harness during a load dump. It should be appreciated that the various embodiments of the present invention are applicable to systems that utilize more or less than 24 Volts.

Selecting clamping devices, e.g., serially coupled transient suppression diodes, to have a cumulative breakdown voltage of approximately 40 Volts, allows the load dump voltage to be clamped below 50 Volts. It should be appreciated that the reason that the clamping devices can be selected with a lower breakdown voltage than the maximum operating voltage is that a load dump will not, in operation, occur simultaneous to a jump start. As the system cannot experience a jump start during a load dump, the voltage on the battery line will generally return below about 32 Volts, after the load dump transient has occurred. As such, a clamp circuit can be allowed to stay active until the battery voltage decays to about 35 Volts.

With reference to Fig. 2, an exemplary load dump protection circuit 100, constructed according to the present invention, is depicted. As is shown, resistors R3 and R4 form a resistive divider that is coupled to a non-inverting input of comparator U1. A trigger signal, which provides an indication of a voltage on a power supply line, is developed across the resistor R4 and is provided to the non-inverting input of the comparator U1. A resistive divider that includes resistors R1 and R2 is coupled to an inverting input of the comparator U1. A reference signal, developed across the resistor R2, provides a reference level to an inverting input of the comparator U1. Resistors R6 and R5 provide the comparator U1 with hysteresis. Specifically, the resistor R6 is coupled between a power supply VCC and an output of the comparator U1 and the resistor R5 is coupled between the output of the comparator U 1 and the non-inverting input of the comparator U1.

A battery V1, e.g., a 24 Volt battery, is coupled to one side of the resistor R3 and to an alternator 12. An output of the comparator U1 is also coupled to a first side of a current limiting resistor R7, whose second side is coupled to an input, i.e., gate, of switch M1. As is discussed above, the switch M1 may be a field-effect transistor (FET), a bipolar junction transistor (BJT), or an insulated-gate bipolar junction transistor (IGBT), among other such switching devices. A drain of the switch M1 is coupled to an anode of a first clamp D3 of a plurality of clamps, D1-D3, which are serially coupled between the power supply line. In one embodiment, the value of the resistors R1-R6 are selected to turn on the switch M1, when the voltage, as provided by the alternator V1, increases above 56 Volts. The value of the resistors R1-R6 are also selected to turn off the switch M 1 when the value of the voltage provided by the alternator 12 decreases below 36 Volts.

Accordingly, a load dump protection circuit has been described herein that advantageously allows for lower voltage integrated circuit (IC) components to be utilized in a given automotive or industrial equipment design.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A load dump protection circuit (100), comprising:
a switch (M1) including a control terminal, a first output terminal and a second output terminal;
a clamp circuit (D1-D3) coupled between a power supply line and the first output terminal of the switch (M1), wherein the second output terminal of the switch (M1) is coupled to a common return;
a comparator (U1) including a first input, a second input and an output, wherein the output of the comparator (U1) is coupled to the control terminal of the switch (M1), the first input of the comparator (U1) is coupled to the power supply line to monitor a magnitude of a trigger signal on the power supply line and the second input of the comparator (U1) receives a reference signal having a reference level, and wherein the comparator (U1) provides a first control signal on the control terminal that causes the switch (M1) to provide a low impedance path between the first and second output terminals when a magnitude of the trigger signal increases above a magnitude of the reference signal, where the comparator (U1) provides a second control signal on the control terminal that causes the switch (M1) to provide a high impedance path between the first and second output terminals when the magnitude of the trigger signal decreases below a shut-off level that is less than the reference level.

2. The circuit (100) of claim 1, wherein the switch (M1) is one of a field-effect transistor (FET), a bipolar junction transistor (BJT) and an insulated-gate bipolar junction transistor (IGBT).

3. The circuit (100) of claim 1, wherein the clamp circuit (D1-D3) includes at least one transient suppression diode.

4. The circuit (100) of claim 3, wherein the at least one transient suppression diode includes three serially coupled transient suppression diodes.

5. The circuit (100) of claim 1, wherein the comparator (U1) is a non-inverting comparator with hysteresis.

6. The circuit (100) of claim 1, wherein the reference level is about 56 Volts and the shut-off level is about 36 Volts.

7. The circuit (100) of claim 1, wherein the clamp circuit (D1-D3) includes at least one varistor.

8. The circuit (100) of claim 7, wherein the at least one varistor includes three serially coupled varistors.

9. A load dump protection circuit (100), comprising:
a switch (M1) including a control terminal, a first output terminal and a second output terminal;
a clamp circuit (D1-D3) coupled between a power supply line and the first output terminal of the switch (M1), wherein the second output terminal of the switch (M1) is coupled to a common return;
a comparator (U1) including a first input, a second input and an output, wherein the output of the comparator (U1) is coupled to the control terminal of the switch (M1), the first input of the comparator (U1) is coupled to the power supply line to monitor a magnitude of a trigger signal on the power supply line and the second input of the comparator (U1) receives a reference signal having a reference level, and wherein the comparator (U1) provides a first control signal on the control terminal that causes the switch (M1) to provide a low impedance path between the first and second output terminals when a magnitude of the trigger signal increases above a magnitude of the reference signal, where the comparator (U1) provides a second control signal on the control terminal that causes the switch (M1) to provide a high impedance path between the first and second output terminals when the magnitude of the trigger signal decreases below a shut-off level that is less than the reference level, and where the switch (M1) is one of a field-effect transistor (FET), a bipolar junction transistor (BJT), and an insulated-gate bipolar junction transistor (IGBT).

10. The circuit (100) of claim 9, wherein the clamp circuit (D1-D3) includes at least one transient suppression diode.

11. The circuit (100) of claim 10, wherein the at least one transient suppression diode includes three serially coupled transient suppression diodes.

12. The circuit (100) of claim 9, wherein the comparator (U1) is a non-inverting comparator with hysteresis.

13. The circuit (100) of claim 9, wherein the reference level is about 56 Volts and the shut-off level is about 36 Volts.

14. The circuit (100) of claim 9, wherein the clamp circuit (D1-D3) includes at least one varistor.

15. The circuit (100) of claim 14, wherein the at least one varistor includes three serially coupled varistors.

16. A method for providing load dump protection, comprising the steps of:
providing a switch (M1) including a control terminal, a first output terminal and a second output terminal;
providing a clamp circuit (D1-D3) coupled between a power supply line and the first output terminal of the switch (M1), wherein the second output terminal of the switch (M1) is coupled to a common return;
providing a comparator (U1) including a first input, a second input and an output, wherein the output of the comparator (U1) is coupled to the control terminal of the switch (M1) and the first input of the comparator (U1) is coupled to the power supply line;
monitoring a magnitude of a trigger signal on the power supply line at the first input of the comparator (U1);
receiving on the second input of the comparator (U1) a reference signal having a reference level;
providing a first control signal on the control terminal that causes the switch (M1) to provide a low impedance path between the first and second output terminals when a magnitude of the trigger signal increases above a magnitude of the reference signal; and
providing a second control signal on the control terminal that causes the switch (M1) to provide a high impedance path between the first and second output terminals when the magnitude of the trigger signal decreases below a shut-off level that is less than the reference level

17. The method of claim 16, wherein the switch (M1) is one of a field-effect transistor (FET), a bipolar junction transistor (BJT) and an insulated-gate bipolar junction transistor (IGBT).

18. The method of claim 16, wherein the clamp circuit (D1-D3) includes three serially coupled transient suppression diodes.

19. The method of claim 16, wherein the comparator (U 1) is a non-inverting comparator with hysteresis.

20. The method of claim 16, wherein the reference level is about 56 Volts and the shut-off level is about 36 Volts.

21. The method of claim 16, wherein the clamp circuit (D1-D3) includes three serially coupled varistors.
